# EUROPEAN PATENT SPECIFICATION

(11) **EP 4 470 917 B1**
(45) Date of publication and mention of the grant of the patent: **29.07.2026**
(21) Application number: 23176482.0
(22) Date of filing: 31.05.2023
(51) Int. Cl.: B64D 11/00, B60R 11/02, B64D 45/00

(54) **DISPLAY DEVICE, AIRCRAFT CABIN AND METHOD FOR ASSEMBLING AN AIRCRAFT CABIN**
ANZEIGEVORRICHTUNG, FLUGZEUGKABINE UND VERFAHREN ZUR MONTAGE EINER FLUGZEUGKABINE
DISPOSITIF D'AFFICHAGE, CABINE D'AÉRONEF ET PROCÉDÉ D'ASSEMBLAGE D'UNE CABINE D'AÉRONEF

(43) Date of publication of application: 04.12.2024
(73) Proprietor: Airbus Operations GmbH, 21129 Hamburg (DE)
(72) Inventor: Jaffrelot, Jean-Baptiste, 21129 Hamburg (DE)
(74) Representative: Airbus Germany

(56) References cited:
- EP-A1- 3 495 275
- EP-A1- 3 546 355
- WO-A1-2014/022484
- DE-A1- 102019 204 355
- US-A1- 2020 079 524
- TRAMS_TRAINS: "U-Bahn München: Erste A-Züge mit Haltestellenansagen und Fahrgastfernsehen", 28 November 2013 (2013-11-28), XP093090794, Retrieved from the Internet <URL:https://www.youtube.com/watch?app=desktop&v=90Vyegj1Sis&t=1m43s> [retrieved on 20231011]

## Description

The invention relates to a display device for an aircraft as well as to a method for assembling an aircraft cabin.

Display devices in typical cabin systems aim to display information either to passengers or crew members. All sorts of information such as safety items or certification relevant items or signs, indications and displays are separately installed and provide information at their specific installation locations. As an example, in a typical cabin entrance zone, up to three separate displays are facing towards cabin attendant seats, providing visual information from the In-Flight Entertainment, Cabin Management & Video Monitoring Systems to crew members. Therefore, there is a need to provide contextual information for both passengers and cabin crew, i.e. cabin attendants.

The source "Trams_trains: "U-Bahn München: Erste A-Züge mit Haltestellenansagen und Fahrgastfernsehen", 28 November 2013 (2013-11-28), XP093090794" describes the Munich subway (U-Bahn) trains equipped with double-sided information screens, which display information to passengers. The source specifically mentions the use of these screens since 2013, and highlights their visibility from both sides, as shown in a referenced video segment.

EP 3 546 355 A1 describes an aircraft area or passenger seat with a textile display integrated into an interior component, such as a seat, wall, door, floor, or lining. The textile display uses fibers capable of changing color. This color change can be performed electrophoretic, thermochromic, or with light-emitting devices, and is controlled by a controller, and can include a personal input unit, such as a touchscreen.

WO 2014/022484 A1 describes premium aircraft passenger suites arranged in columns of alternating fore and aft facing seats. Suites include adjustable lie-flat seats, fixed and moveable video monitors, deployable tray tables, shared desks, and moveable partitions for privacy or conferencing. Suites can nest, share partition walls, and allow line of sight between adjacent suites when monitors and partitions are stowed.

EP 3 495 275 A1 describes a passenger seat system for vehicles, particularly aircraft, having a seat with a backrest, a headrest, and a display device integrated into the headrest. The display device is adjustable in position and orientation, and the system includes a support structure for the seat.

US 2020/0 079 524 A1 describes a passenger seat system for vehicles, especially aircraft, comprising a seat with a backrest, a headrest, and a display device integrated into the headrest. The display device can be adjusted in position and orientation. The system further includes a support structure for the seat for passenger comfort and ergonomics.

DE 10 2019 204 355 A1 describes a passenger seat for vehicles, especially aircraft, featuring a seat with a backrest and a headrest. The headrest includes a display device, which is adjustable in position and orientation. The seat system also comprises a support structure for passenger comfort and ergonomic adjustment of the display.

### Summary of the claimed invention

According to the invention, this problem is solved by the subject matters of the independent claim 1 . Preferred embodiments are claimed in dependent claims 2-8. The claimed invention also claims a method according to claim 9.

### Summary of the disclosure

According to a first aspect of the disclosure, a display device for an aircraft cabin is provided. The display device comprises a first display directed to a first direction, a second display directed to a second direction different from the first direction, mounting means for mounting the first display and the second display to a wall of the aircraft cabin, and a controller configured to control a first image displayed on the first display and a second image displayed on the second display, wherein the first direction and the second direction form an angle greater than about 90°.

According to a second aspect of the disclosure, a display device for a cabin attendant in an aircraft cabin is provided. The display device comprises a first display directed to a first direction, mounting means for mounting the first display to a wall of the aircraft cabin, and a controller configured to control a first image displayed on the first display, wherein the controller is configured to receive cabin attendant information from a cabin management system and a cabin video monitoring system and synthesize the cabin attendant information for displaying, preferably with priority, on the first display. Airline content relevant to passengers may be displayed on this first display as well in specific contexts such as boarding.

According to a third aspect of the disclosure, an aircraft cabin comprising a display device as mentioned above is provided. The aircraft cabin comprises the display device as mentioned above attached to a wall of the aircraft cabin, wherein the first display is directed to a seat of a cabin attendant and the second display is directed to at least one seat of a passenger.

According to a fourth aspect of the disclosure, a method for assembling an aircraft cabin is provided. The method comprises providing a display device as mentioned above and mounting the display device to the wall, in particular to a ceiling, of the aircraft cabin.

A fundamental concept of the disclosure is to provide a display device that is controlled by a single controller and able to display information received from multiple systems of the aircraft. These systems may comprise the cabin management system or air control system, which covers all safety functions of the aircraft cabin, as well as the cabin video monitoring system, for example, direct view, which is useful for surveillance of the passengers during critical flight phases, such as taxing, take-off, cruise and landing. Such information are usually provided on separate displays, such as the Attendant Indication Panel (AIP) and Attendant Control Pane (ACP). A typical AIP is an LCD having 2 lines à 16 characters and has two indicator lights, e.g. one red and one green indicator light. These are used to ensure a far-reaching indication when a respective message is displayed. The typically five fields of an ACP are separately activated to indicate the different system information. The lights of the typical ACP are activated via five discrete outputs either continuously or flashing. The present disclosure provides information of multiple systems of the aircraft onto one display. Therefore, the first image displayed on the first display may contain one or more of the following information: Emergency Call, Lavatory Smoke Warning, Waste Warning Indication, All Attendant Call, Evacuation, Signalling, Normal call, Passenger Call (Type lavatory Attendant), Passenger Call (Type Seatrow), "Purser Call" status, Service Interphone, Prerecorded Announcement, Passenger Address, "Sterile Cockpit" Indication, Lavatory Smoke Location/Pax Calls. Other sources may relate to provide information to the passengers and may be displayed primarily on the second display, however, on the first display as well in specific contexts such as boarding..

In case of display device with multiple screens, the first display and the second display of the display device is directed in different directions, which are larger than about 90°. In this way, it is ensured that the respective contextual information displayed on the first and second displays are shown to different groups of people.

A particular advantage of the solution is that contextual information for both passengers and cabin crew, i.e. cabin attendants is provided in a single place. The place of the display device can be chosen to be particular suitable so that it leads to improved ergonomy and standardization. In this way, the device can be cost-efficiently built to the airline demand for either the cabin crew or the passenger's, i.e. pax, indications - or both.

The display device is typically mounted to a wall of the aircraft cabin. Depending on the mounting means, the mounting may be performed at a single point via fixing means, such as screws or relying on already existing mechanical interfaces within the aircraft cabin (e.g. attachment rails), or at several places thus defining the plane. The mounting means can thus define a mounting plane, which is the plane to which the display is mounted to. The mounting plane may be plane or curved, depending on the wall of the aircraft cabin, to which the display device is being mounted. The mounting means can also be integrated into a housing, which may also enclose the first display and/or the second display.

The controller can be integrated into any component of the display device such as the first display, the second display and/or the mounting means and may be enclosed in the same housing. The controller can also be located at a separate location apart from the displays and the mounting means. In this case, the electric connection to the displays may be established by cables passing through the mounting means. A wireless connection between the controller and the displays may also be realized.

Advantageous embodiments and further developments emerge from the description with reference to the figures.

According to some aspects of the display device according to the disclosure, wherein the first direction and the second direction are substantially opposite in a projection towards the wall. In particular, the first direction and the second direction are substantially opposite in a projection towards a mounting plane, to which the display device can be mounted. Alternatively or in addition, the first and second display may be rotated with respect to each other in the mounting plane. In this case, the first direction is substantially opposite to the second direction in a projection towards a plane perpendicular to the wall and the center plane. With reference to an aircraft cabin transversal plane, both displays may not be arranged fully symmetrically but may be individually adjusted so as to offer best viewing angle considering the exact mounting location. The center plane is arranged substantially transversely to the mounting plane, i.e. the wall of the aircraft cabin between the first display and the second display. In this way, a person can only see one of the first display and the second display, thus getting not confused when displaying different information on the respective first and second displays.

According to some aspects of the display device according to the disclosure, the controller is configured to receive cabin attendant information from a cabin management system and a cabin video monitoring system. The first image is a synthesized image containing at least some of the cabin attendant information. In this way, contextual information for the cabin attendants are provided from multiple sources of the aircraft, such as the cabin management system and a cabin video monitoring system. The information may include cabin video surveillance, such as Direct View, or information about the cabin management system, such as lighted signs, pax Call, cabin interphone, lavatory status etc.. As already explained above, such information are typically provided on separate displays, such as the Attendant Indication Panel (AIP) and Attendant Control Pane (ACP). In this way, relevant information can be provided in a compact way to the cabin attendants, thereby also providing information on the second display. This improves the accessability of information.

According to some aspects of the display device according to the disclosure the controller is configured to receive passenger information from an aircraft information and service system and/or passenger information and service system. The second image is a synthesized image containing at least some of the passenger information. The passenger information may include cabin video surveillance, such as "Direct View", lighted signs, pax call, cabin interphone, lavatory status provided by the cabin management system, a flight map, airline content, such as boarding messages, destination information. In this way, relevant information can be provided in a compact way, the accessability of information.

According to some further aspects of the display device according to the disclosure, the display device further comprises a sensor. The sensor may be camera, which may be directed to the first direction and/or the second direction. Alternatively or in addition, the sensor can also be include a microphone.The sensor is connected to the controller and configured to provide a video signal and/or audio signal to the controller. The sensor can thus be used for video and/or autio surveillance purposes. The video signal and/or audio signal may be output on one of the first or the second display and/or related speakers, or it may be sent to different displays and/or speakers in the airplane. The controller may further be configured to detect at least a person in a field of view of the camera and may provide information about the person to the cabin attendants.

According to some further aspects of the display device according to the disclosure, the first display and the second display form respective first and second tilt angles with the center plane, wherein the tilt angle is between 0° and 50°. The viewing angles for both first and second display may be the same, or the first tilt angle is larger than the second tilt angle by, for example, at least 5°. This enables an optimum viewing angle of the displays to the intended group of people, in particular when mounted on a ceiling to the cabin attendants, which usually are located closer to the screen.

According to some further aspects of the display device according to the disclosure, the first display and second display are facing away from the center plane. In this way, a very compact display device can be realized.

According to some further aspects of the display device according to the disclosure, the first display and second display are facing toward the center plane. In this way, an intelligent "sunk-in" mounting scheme of the display device into a cabin wall or ceiling can be realized.

According to some further aspects of the display device according to the disclosure, the controller is configured to change the first image displayed on the first display automatically depending on the flight phase. The flight phase may be e.g. taxing, take-off, cruise and landing. The controller may also be configured to change the second image displayed on the second display automatically depending on the flight phase. In this way, contextual information can be provided to the different groups in an automatic and helpful manner.

According to some further aspects of the aircraft cabin according to the disclosure, the aircraft cabin further comprises an attendant control panel, which is connected to the controller of the display device. The controller is configured to change the first image displayed on the first display in response to a manual input of the attendant control panel. In this way, a user such as a cabin attendant can switch between several different contextual information from e.g. received from e.g. a cabin management system and a cabin video monitoring system. This improves the accessability of information to the cabin attendants.

According to some further aspects of the aircraft cabin according to the disclosure, the display device is arranged on a ceiling of the cabin. At this place, the display device is particularly visible for the intended group of people.

According to some further aspects of the aircraft cabin according to the disclosure, the display device is arranged on a ceiling above an aisle. At this place as well, the display device is particularly visible for the intended group of people.

According to some further aspects of the aircraft cabin according to the disclosure, the display device is arranged on a monuments of the cabin. Furthermore, the display device may be arranged on a crossing point between two monuments. At these places as well, the display device is particularly visible for the intended group of people, such as the cabin attendants working or sitting in the galley and the passengers seats.

According to some further aspects of the aircraft cabin according to the disclosure, the display device is arranged between a galley section or a lavatory section and the passenger seats. At this place as well, the display device is particularly visible for the intended group of people such as the cabin attendants working or sitting in the galley and the passengers seats.

According to some further aspects of the aircraft cabin according to the disclosure, the display device is arranged between overhead storage compartment. In particular, the display device may be arranged between an overhead storage compartment on one side and a galley section or a lavatory section on the other side. At this place as well, the display device is particularly visible for the intended group of people.

According to some further aspects of the aircraft cabin according to the disclosure, the display device is arranged on an entrance or an entrance region of the aircraft. At this place as well, the display device is particularly visible for the intended group of people when entering the airplane. Furthermore, seats for cabin attendants are often located in this area making the place suitable for the display device.

According to some further aspects of the aircraft cabin according to the disclosure, the display device is arranged in a FWD section, AFT section and/or MID section. These sections can be, for example, a FWD/AFT/MID utility area of the aircraft cabin. These sections have equal relevance and importance, since any transition area between utility area with crew workstations and pax areas are probable installation locations. At this place as well, the display device is particularly visible for the intended group of people since the display directed to the passenger seats is visible for a relatively large fraction of passengers of the aircraft.

The above embodiments and further developments can be combined with each other as desired, if useful. In particular, all features of the display device for an aircraft cabin are transferable to the display device for a cabin attendant in an aircaft, a vehicle cabin and/or the method for assembling the display device, and vice versa. Further possible embodiments, further developments and implementations of the disclosure also comprise combinations, not explicitly mentioned, of features of the disclosure described before or below with respect to the embodiments. In particular, the skilled person will thereby also add individual aspects as improvements or additions to the respective basic form of the present disclosure.

The present invention is explained more specifically below on the basis of the exemplary embodiments indicated in the schematic figures, in which:
- Fig. 1: shows a schematic illustration of a display device for an aircraft cabin according to an embodiment of the invention;
- Fig. 2: shows a schematic illustration of an aircraft cabin according to an embodiment of the invention;
- Fig. 3: shows a schematic illustration of a display device for an aircraft cabin according to a further embodiment of the invention;
- Fig. 4: shows a schematic illustration of a display device for an aircraft cabin according to a further embodiment of the invention;
- Fig. 5: shows a schematic illustration of an aircraft indicating a position of the display device according to a further embodiment of the invention;
- Fig. 6: shows a schematic illustration of a section of an aircraft cabin according to a further embodiment of the invention;
- Fig. 7: shows a schematic illustration of an aircraft cabin according to a further embodiment of the invention;
- Fig. 8: shows a schematic illustration of an aircraft cabin according to a further embodiment ;
- Fig. 9: shows a schematic illustration of an aircraft cabin according to a further embodiment ;
- Fig. 10: shows a schematic illustration of an aircraft cabin according to a further embodiment ;
- Fig. 11: shows a schematic illustration of an aircraft cabin according to a further embodiment ; and
- Fig. 12: shows a schematic illustration of a method of assembling an aircraft cabin according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

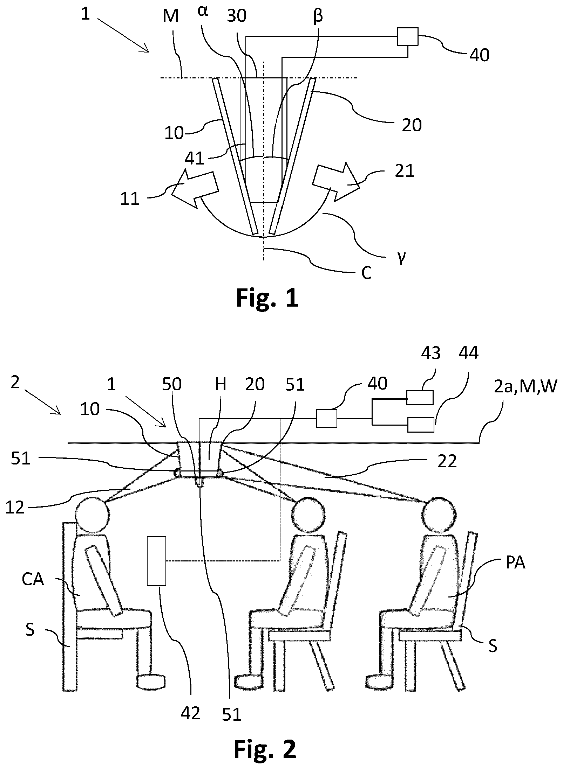

Fig. 1 shows a schematic illustration of a display device 1 for an aircraft cabin 2 according to an embodiment of the invention.

The display device 1 shown in Fig. 1 comprises a first display 10 directed to a first direction 11. The display device 1 further comprises a second display 20 directed to a second direction 21 different from the first direction 11. The first and second display 10, 20 can be any kind of display suitable for the task. Typical displays used in aircraft cabins, such as an LCD- or OLCD-type display, may be employed here. The display device 1 further comprises mounting means 30 for mounting the first display 10 and the second display 20 to a wall W of the aircraft cabin 2. In this embodiment, the mounting means is shown as a component between the first and second displays 10, 20. The mounting means 30 has fixing means, such as screw for fixing the first and second display 10, 20 to the mounting means 30 and to the wall of the aircraft cabin 2. In further embodiments, the mounting means 30 can be integrated into a housing, which may also enclose the first and second displays 10, 20.

The display device 1 further comprises a controller 40. The controller 40 can be any type of suitable electronic component, such as a programmable chip, a FPGA, a computer, which may also be or integrated into the board computer of the aircraft. The controller 40 is configured to control a first image displayed on the first display 10 and a second image displayed on the second display 20. According to the invention, the first image includes information for cabin attendants CA and the second image includes information for passengers PA, as will be described in more detail further below. In this embodiment, an electric connection from the first and second display 10, 20 to the control 40 is established by cables 41 passing through the mounting means 30. In further embodiments, a wireless connection between the controller and the displays may also be realized.

In Fig. 1, it is shown that the first direction 11 and the second direction 21 form an angle γ greater than about 90°. This means that the first display 10 and the second display 20 are directed in direction 11, 21, which are about or greater than a right angle. In this embodiment, the first direction 11 and the second direction 21 are substantially opposite in a projection towards a mounting plane M, to which the display device 1 can be mounted. The mounting plane M is shown in Fig. 1 as a dash-dotted line in a horizontal direction. The mounting plane typically is the wall W of the aircraft cabin 2 (both not shown in Fig.1), which will be described further below.

It can further be seen that in this embodiment of the display device 1, the first display 10 and the second display 20 form respective first and second tilt angles α, β with a center plane C. The center plane C is shown in Fig. 1 as a dash-dotted line in a vertical direction. The center plane C is arranged substantially transversely to the mounting plane M, i.e. the wall W of the aircraft cabin 2 between the first display 10 and the second display 20. In this embodiment, the first tilt angle α and the second tilt β angle have about the same value. For the mounting on a ceiling 2a of an aircraft cabin 2, as will be described further below, the first angle α and second tilt angle β usually are between 0° and 50°, however, not limited thereto. In further embodiments, the first and second display 10, 20 do not form tilt angles α, β.

In further embodiment, the first and second display 10, 20 are rotated with respect to each other in the mounting plane M. In this case, the first direction 11 is substantially opposite to the second direction 21 in a projection towards a plane perpendicular to the wall W and the center plane C.

Fig. 2 shows a schematic illustration of an aircraft cabin 2 according to an embodiment of the invention.

The aircraft cabin 2 shown in Fig. 2 comprises the display device 1 according to the invention, e.g. as described above with reference to Fig. 1. The display device 1 is a display device for a cabin attendant CA in an aircraft cabin 2 comprising the first display 10 . The display device 1 is attached to a wall W of the aircraft cabin 2. In this embodiment, the wall W thus represents the mounting plane M, at which the display device 1 is mounted. More specifically, the display device 1 is arranged on a ceiling 2a of the aircraft cabin 2 to provide a good visibility to the group of people. In this embodiment, a housing H is provided, in which the mounting means 30, the first display 10 and the second display 20 are provided. In further embodiments not being part of the claimed invention, the housing H only contains one of the first display 1 and the second display 20 and a respective mounting part of the mounting means 30.

It is further shown in Fig.2 that the first display 10 is directed toward a seat S of a cabin attendant CA and the second display 20 is directed to a seat S of a passenger PA. The respective first and second displays 10, 20 thus provide relevant contextual information to the group of people. This means that the first image includes information for cabin attendants CA and the second image includes information for passengers PA. In Fig.2, a respective first field of view 12 of the cabin attendants CA viewing the first display 10 and a second field of view 22 of the passengers PA viewing the second display 20 are shown.

In this embodiment, the display device 1 further comprises integrated sensors 50, 51, which provide video and audio information from the environment. In this embodiment, one sensor 50 is configured as a camera 50 having video and audio capture capabilities and is mounted below the mounting means 30. In this embodiment, the camera 50 has a fish-eye lens and has a 360°-view, which covers the first direction 11 and the second direction 21. In further embodiments, the camera 50 is directed to the first direction 11 and/or the second direction 22. The camera 50 is connected to the controller 40, as shown in Fig. 2. The camera 50 is configured to provide a video signal and an audio signal to the controller 40. Furthermore, the display device comprises two microphones 51, which are mounted in front of the first display 10 and the second display 20.

In further embodiments, the sensor 50, 51 is configured only as a microphone to provide only an audio signal to the controller 40, which may send the audio signal to other locations in the aircraft cabin, where they may be of use. In some embodiments, the video signal received from the camera 50 is displayed on either or both of the first display 10 and the second display 20.

The controller 40 of the display device is further connected to a attendant control panel 42, which is configured to receive commands e.g. by a cabin attendant CA, as will be described below.

According to the invention, the controller 40 is configured to receive cabin attendant information from a cabin management system 43 and a cabin video monitoring system 44 and synthesize the cabin attendant information for display on the first display. The first image thus is a synthesized image containing the at least some of the cabin attendant information. Furthermore, the controller 40 is configured to receive passenger information from an aircraft information and service system and/or passenger information and service system. Therefore, in this embodiment, the second image as well is a synthesized image containing at least some of the passenger information.

The cabin attendant information and the passenger information may thus include cabin video surveillance, such as "Direct View", lighted signs, pax call, cabin interphone, lavatory status provided by the cabin management system, a flight map, airline content, such as boarding messages, destination information. Such information is typically provided on separate displays, such as the Attendant Indication Panel (AIP) and Attendant Control Pane (ACP). In this invention, the first image displayed on the first display 10 may be synthesized and may thus contain one or more of the following information: emergency call, lavatory smoke warning, waste warning indication, all attendant call, evacuation, signalling, normal call, passenger call (type lavatory attendant), passenger call (type seatrow), purser call status, service interphone, prerecorded announcement, passenger address, sterile cockpit indication, lavatory smoke location/pax calls. These information may then by displayed on the respective screen dependent on the flight phase, e.g. during taxing, take-off, cruise or landing. The displayed information on the first and second display 10, 20 may then be changed automatically, or they may be changed by a manual command of the cabin attendant CA on the attendant control panel 42.

In further embodiment not being part of the claimed invention, the display device 1 is configured as a display device only for a cabin attendant CA. In this case, the display device 1 comprises the first display 10 but not the second display 20. The controller 40 is configured to receive cabin attendant information from a cabin management system 43 and a cabin video monitoring system 44 and synthesize the cabin attendant information for displaying on the first display 10. The cabin attendant CA thus obtains information from multiple sources when watching the first disaply 10. As in the embodiment described above, the displayed information may automatically change dependening on the flight phase, or the cabin attendant CA may change the displayed information manually, e.g. over the attendant control panel 42.

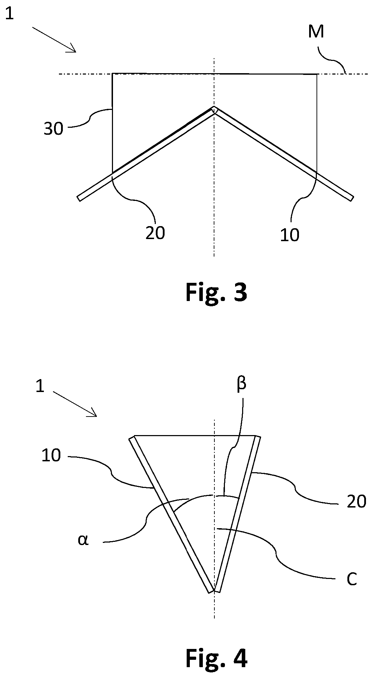

Fig. 3 shows a schematic illustration of a display device 1 for an aircraft cabin 2 according to a further embodiment of the invention.

The display device 1 shown in Fig. 3 is based on the display device 1 shown and described with reference to Fig. 1 and 2. The controller 40 has been omitted in Fig. 3 for better legibility.

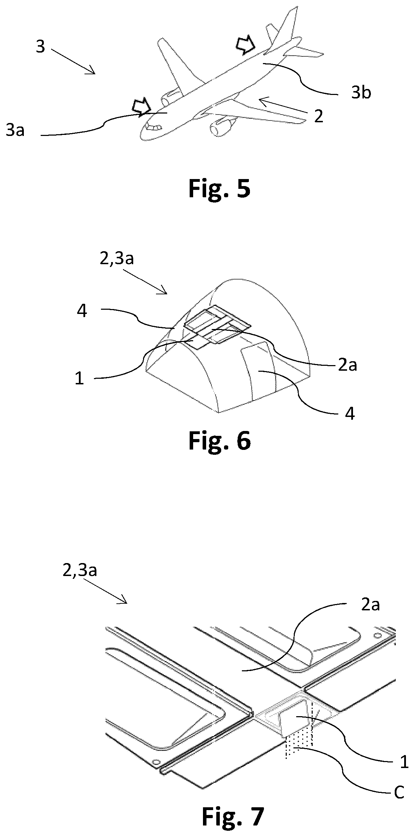

In this embodiment, the first display 10 and second display 20 are arranged inversely in that the first display 10 and second display 20 are facing toward the center plane C. The first direction 11 and the second direction 21 remain substantially unaffected. This type of mounting can be suitable for a "sunk-in" mounting. In this case, the mounting plane M shown in Fig. 3 is typically behind the wall W. However, the sunk-in type integration does not necessarly imply that the display need to be inversely arranged, as it will be described further below with reference to Fig. 7.

Fig. 4 shows a schematic illustration of a display device 1 for an aircraft cabin 2 according to a further embodiment of the invention.

The display device 1 shown in Fig. 4 is based on the display device 1 shown and described with reference to Fig. 1 to 3, wherein the controller 40 has been omitted again in Fig. 4 for better legibility.

In this embodiment, the first display 10 and the second display 20 form respective first and second tilt angles α, β with the center plane C, wherein the first tilt angle α is larger than the second tilt angle β by at least 5°. In this way, the angle can take into account a seat S of the cabin attendant CA, which is located closer to the display device 1 than the average of seats S of the passengers PA.

Fig. 5 shows a schematic illustration of an aircraft 3 indicating a position of the display device according to a further embodiment of the invention.

The airplane 3 shows two possible locations of the display device 1. The first position is a FWD section 3a located in front of the aircraft cabin 2 of the airplane 3. The second location is a AFT section 3b in a rear part of the aircraft cabin 2 of the airplane 3. In further embodiments, the display device 1 is arranged in the MID section of the airplane 3 in the middle of the aircraft cabin 2 of the airplane 3.

Fig. 6 shows a schematic illustration of a section of an aircraft cabin 2 according to a further embodiment of the invention.

Fig. 6 shows the position of the display device 1, which is arranged in this embodiment on the ceiling 2a of a forward section 3a of the aircraft cabin 2. It is further shown that the location of the display device 1 is near and between two entrances 4 to the airplane 3.

Fig. 7 shows a schematic illustration of an aircraft cabin 2 according to a further embodiment of the invention.

Fig. 7 shows a section of the forward section 3a as shown in Fig. 6 from a point of view below the ceiling 2a of the forward section 3a of the aircraft cabin 2.

It is shown in Fig. 7 that the display device 1 is arranged in a forward section 3a, which is the FWD utility area of the aircraft cabin 2 in this embodiment. More specifically, the display device 1 is arranged on a ceiling 2a above an aisle 2b. Although this embodiment represents a sunk-in type mounting, the first display 20 and second display 10 are facing away from the center plane C. In further embodiments, the display device 1 is arranged in the AFT section (3b) or MID section, in particular in the respective utility areas.

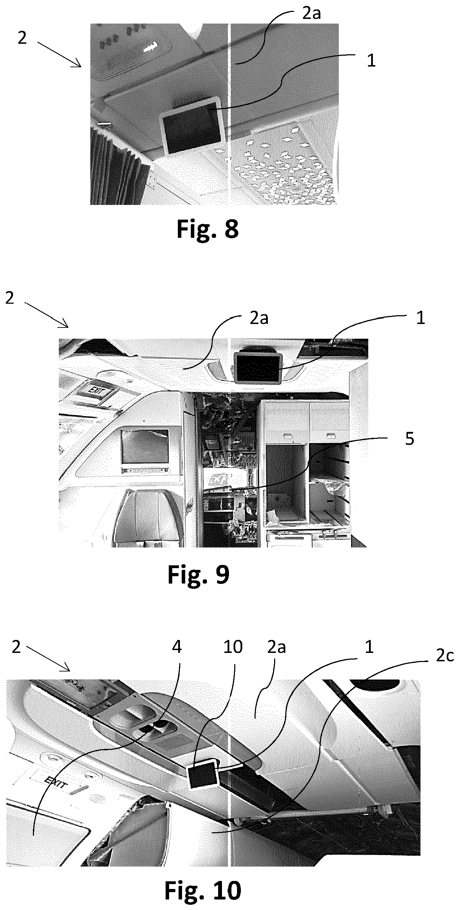

Fig. 8 shows a schematic illustration of an aircraft cabin 2 according to a further embodiment of the invention.

Fig. 8 shows another example of a position or location of the display device 1 in an aircraft cabin 2. In this case, the display device 1, which is not part of the claimed invention, has only the first display 10 for

illustration purposes. In this embodiment, the display device 1 is arranged on a ceiling 2a and protrudes from the ceiling 2a.

Fig. 9 shows a schematic illustration of an aircraft cabin 2.

Fig. 9 shows another example of another position or location of the display device 1 in an aircraft cabin 2. In this embodiment as well, the display device 1 is arranged on a ceiling 2a above an aisle 2b at a different location of the forward section 3a of the airplane 3 in front of the cockpit section 5.

Fig. 10 shows a schematic illustration of an aircraft cabin 2 not being part of the claimed invention.

Fig. 10 shows another example of another position or location of the display device 1 in an aircraft cabin 2. In this embodiment as well, the display device 1 is arranged on a ceiling 2a above an aisle 2b. In this embodiment, the display device 1 has only the first display 10 for illustration purposes. The display device 1 is located near an entrance 4 of the airplane 3, which can be, for example, a regular entrance or an emergency exit.

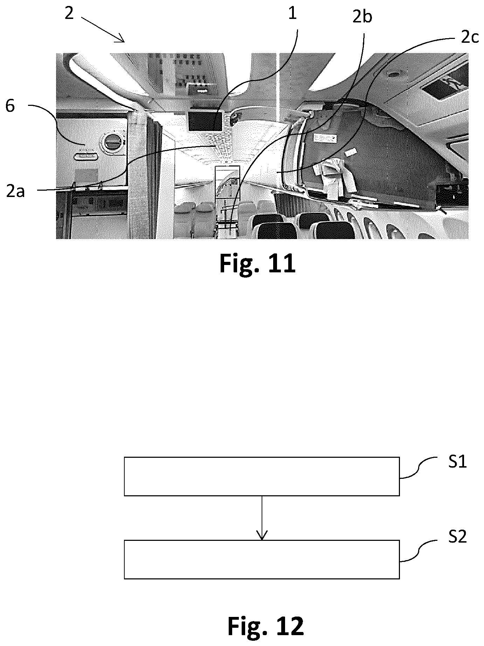

Fig. 11 shows a schematic illustration of an aircraft cabin 2.

Fig. 11 shows another example of another position or location of the display device 1 in an aircraft cabin 2. In this embodiment as well, the display device 1 is arranged on a ceiling 2a above an aisle 2b. However, in this embodiment, the display device 1 is arranged between two monuments of the aircraft cabin 2, i.e. between a galley section 6 and the seats S of the passengers PA, i.e. the travel classes. In further embodiments, the display device 1 is located between a lavatory section and the seats S of the passengers PA, or between the galley section 6 and the lavatory section of the aircraft cabin 2.

In further embodiments, the display device 1 is arranged between overhead storage compartment 2c, e.g. above an aisle 2b near the seats S of the passengers PA, or between an overhead storage compartment 2c on one side and a galley section 6 or a lavatory section on the other side.

Fig. 12 shows a schematic illustration of a method of assembling an aircraft cabin 2 according to a further embodiment of the invention.

The method comprises the step of providing S1 a display device 1 according to the invention.

The method further provides the step of mounting S2 the display device 1 to the wall W of the aircraft cabin 2. Preferably, the display device 1 is mounted to a ceiling 2a of the aircraft cabin 2.

In the detailed description above, various features have been combined in one or more examples in order to improve the rigorousness of the illustration. However, it should be clear in this case that the above description is of merely illustrative but in no way restrictive nature. It serves to cover all alternatives, modifications of the various features and exemplary embodiments. Many other examples will be immediately and directly clear to a person skilled in the art on the basis of his knowledge in the art in consideration of the above description.

### List of reference signs

- 1: display device
- 2: aircraft cabin
- 2a: ceiling
- 2b: aisle
- 2c: overhead storage compartment
- 3: aircraft
- 3a: FWD section
- 3b: AFT section
- 4: entrance
- 5: cockpit section
- 6: galley section
- 10: first display
- 11: first direction
- 12: first field of view
- 20: second display
- 21: second direction
- 22: second field of view
- 30: mounting means
- 40: controller
- 41: cable
- 42: attendant control panel
- 43: cabin management system
- 44: cabin video monitoring system
- 50: sensor, camera
- 51,: sensor, microphone
- C: center plane
- CA: cabin attendant
- H: housing
- M: mounting plane
- PA: passenger
- S: seat
- W: wall of the aircraft cabin
- α: first tilt angle
- β: second tilt angle
- γ: angle between first and second direction

## Claims

1. Display device (1) for an aircraft cabin (2), comprising:
a first display (10) directed to a first direction (11),
a second display (20) directed to a second direction (21) different from the first direction (11),
mounting means (30) for mounting the first display (10) and the second display (20) to a wall (W) of the aircraft cabin (2), and
a controller (40) configured to control a first image displayed on the first display (10) and a second image displayed on the second display (20),
wherein the first direction (11) and the second direction (21) form an angle (γ) greater than about 90°,
wherein the controller (40) is configured to receive cabin attendant information from a cabin management system (43) and a cabin video monitoring system (44),
wherein the first image is a synthesized image containing at least some of the cabin attendant information.

2. Display device (1) according to claim 1, wherein the first direction (11) and the second direction (21) are substantially opposite in a projection towards the wall (W).

3. Display device (1) according to claim 1 or 2, wherein the controller (40) is configured to receive passenger information from an aircraft information and service system and/or passenger information and service system, wherein the second image is a synthesized image containing at least some of the passenger information.

4. Display device (1) according to any of the preceding claims, further comprising a sensor (50, 51), , wherein the sensor (50, 51) is connected to the controller (40) and configured to provide a video signal and/or audio signal to the controller (40), wherein the sensor in particular includes a camera (50, 51) and/or a microphone (51).

5. Display device (1) according to any of the preceding claims, wherein the first display (10) and the second display (20) form respective first and second tilt angles (α, β) with a center plane (C), wherein the tilt angle is between 0° and 50°.

6. Display device (1) according to claim 5, wherein the first tilt angle (α) is larger than the second tilt angle (β) by at least 5°.

7. Display device (1) according to claim 5 or 6, wherein the first display (20) and second display (10) are facing away from the center plane (C).

8. Display device (1) according to claim 5 or 6, wherein the first display (10) and second display (20) are facing toward the center plane (C).

9. Method for assembling an aircraft cabin (2) comprising:
providing (S1) a display device (1) according to any one of claims 1 to 8; and
mounting (S2) the display device (1) to the wall (W), in particular to a ceiling (2a), of the aircraft cabin (2).

## Patentansprüche

1. Anzeigevorrichtung (1) für eine Flugzeugkabine (2), umfassend:
eine erste Anzeige (10), die in eine erste Richtung (11) gerichtet ist,
eine zweite Anzeige (20), die in eine von der ersten Richtung (11) verschiedene zweite Richtung (21) gerichtet ist,
Befestigungsmittel (30) zum Befestigen der ersten Anzeige (10) und der zweiten Anzeige (20) an einer Wand (W) der Flugzeugkabine (2), und
eine Steuereinheit (40), die dafür konfiguriert ist, ein auf der ersten Anzeige (10) angezeigtes erstes Bild und ein auf der zweiten Anzeige (20) angezeigtes zweites Bild zu steuern,
wobei die erste Richtung (11) und die zweite Richtung (21) einen Winkel (γ) von mehr als etwa 90° bilden,
wobei die Steuereinheit (40) dafür konfiguriert ist, Flugbegleiterinformationen von einem Kabinenmanagementsystem (43) und einem Kabinen-Videoüberwachungssystem (44) zu empfangen, wobei das erste Bild ein synthetisiertes Bild ist, das zumindest einige der Flugbegleiterinformationen enthält.

2. Anzeigevorrichtung (1) nach Anspruch 1, wobei die erste Richtung (11) und die zweite Richtung (21) in einer Projektion zur Wand (W) im Wesentlichen entgegengesetzt sind.

3. Anzeigevorrichtung (1) nach Anspruch 1 oder 2, wobei die Steuereinheit (40) dafür konfiguriert ist, Passagierinformationen von einem Flugzeuginformations- und -service-system und/oder Passagierinformations- und -service-system zu empfangen, wobei das zweite Bild ein synthetisiertes Bild ist, das zumindest einige der Passagierinformationen enthält.

4. Anzeigevorrichtung (1) nach einem der vorhergehenden Ansprüche, ferner umfassend einen Sensor (50, 51), wobei der Sensor (50, 51) mit der Steuereinheit (40) verbunden und dafür konfiguriert ist, ein Videosignal und/oder Audiosignal an die Steuereinheit (40) bereitzustellen, wobei der Sensor insbesondere eine Kamera (50, 51) und/oder ein Mikrofon (51) umfasst.

5. Anzeigevorrichtung (1) nach einem der vorhergehenden Ansprüche, wobei die erste Anzeige (10) und die zweite Anzeige (20) jeweilige erste und zweite Neigungswinkel (α, β) mit einer Mittelebene (C) bilden, wobei der Neigungswinkel zwischen 0° und 50° liegt.

6. Anzeigevorrichtung (1) nach Anspruch 5, wobei der erste Neigungswinkel (α) um mindestens 5° größer ist als der zweite Neigungswinkel (β).

7. Anzeigevorrichtung (1) nach Anspruch 5 oder 6, wobei die erste Anzeige (20) und die zweite Anzeige (10) von der Mittelebene (C) wegweisen.

8. Anzeigevorrichtung (1) nach Anspruch 5 oder 6, wobei die erste Anzeige (10) und die zweite Anzeige (20) zur Mittelebene (C) hinweisen.

9. Verfahren zum Zusammenbauen einer Flugzeugkabine (2), umfassend:
Bereitstellen (S1) einer Anzeigevorrichtung (1) nach einem der Ansprüche 1 bis 8; und
Befestigen (S2) der Anzeigevorrichtung (1) an der Wand (W), insbesondere an einer Decke (2a), der Flugzeugkabine (2).

## Revendications

1. Dispositif d'affichage (1) pour une cabine d'aéronef (2), comprenant :
un premier dispositif d'affichage (10) orienté vers une première direction (11),
un second dispositif d'affichage (20) orienté vers une seconde direction (21) différente de la première direction (11),
des moyens de montage (30) pour monter le premier dispositif d'affichage (10) et le second dispositif d'affichage (20) sur une paroi (W) de la cabine d'aéronef (2), et
une unité de commande (40) configurée pour commander une première image affichée sur le premier dispositif d'affichage (10) et une seconde image affichée sur le second dispositif d'affichage (20),
dans lequel la première direction (11) et la seconde direction (21) forment un angle (γ) supérieur à environ 90°,
dans lequel l'unité de commande (40) est configurée pour recevoir des informations de personnel de cabine en provenance d'un système de gestion de cabine (43) et d'un système de surveillance vidéo de cabine (44), dans lequel la première image est une image synthétisée contenant au moins certaines des informations de personnel de cabine.

2. Dispositif d'affichage (1) selon la revendication 1, dans lequel la première direction (11) und la seconde direction (21) sont sensiblement opposées dans une projection vers la paroi (W).

3. Dispositif d'affichage (1) selon la revendication 1 ou 2, dans lequel l'unité de commande (40) est configurée pour recevoir des informations de passagers en provenance d'un système d'information et de service d'aéronef et/ou d'un système d'information et de service de passagers, dans lequel la seconde image est une image synthétisée contenant au moins certaines des informations de passagers.

4. Dispositif d'affichage (1) selon l'une quelconque des revendications précédentes, comprenant en outre un capteur (50, 51), dans lequel le capteur (50, 51) est connecté à l'unité de commande (40) et configuré pour fournir un signal vidéo et/ou un signal audio à l'unité de commande (40), dans lequel le capteur comprend en particulier une caméra (50, 51) et/ou un microphone (51).

5. Dispositif d'affichage (1) selon l'une quelconque des revendications précédentes, dans lequel le premier dispositif d'affichage (10) et le second dispositif d'affichage (20) forment des premier et second angles d'inclinaison (α, β) (respectifs avec un plan central (C), dans lequel l'angle d'inclinaison est compris entre 0° et 50°.

6. Dispositif d'affichage (1) selon la revendication 5, dans lequel le premier angle d'inclinaison (α) est supérieur au second angle d'inclinaison (β) d'au moins 5°.

7. Dispositif d'affichage (1) selon la revendication 5 ou 6, dans lequel le premier dispositif d'affichage (20) et le second dispositif d'affichage (10) sont orientés à l'opposé du plan central (C).

8. Dispositif d'affichage (1) selon la revendication 5 ou 6, dans lequel le premier dispositif d'affichage (10) et le second dispositif d'affichage (20) sont orientés vers le plan central (C).

9. Procédé d'assemblage d'une cabine d'aéronef (2) comprenant le fait de :
fournir (S1) un dispositif d'affichage (1) selon l'une quelconque des revendications 1 à 8; et
monter (S2) le dispositif d'affichage (1) sur la paroi (W), en particulier sur un plafond (2a), de la cabine d'aéronef (2).
